# DEMANDE DE BREVET EUROPEEN

(11) **EP 1 148 145 A1**
(43) Date de publication de la demande: **24.10.2001**
(21) Numéro de dépôt: 00870082.5
(22) Date de dépôt: 21.04.2000
(51) Int. Cl.: C21C 5/46, C21C 7/10, F16L 37/18, C22B 9/05

(54) **Support de tube dégazeur pour métal en fusion et tube dégazeur**

(71) Demandeur: Vesuvius Crucible Company, Wilmington, DE 19803 (US)
(72) Inventeur: Wisse, Denis, 59600 Maubeuge (FR)
(74) Mandataire: Debled, Thierry

(57) **Abrégé**

La présente invention a pour objet un support de tube dégazeur pour métal en fusion. Ce support comprend au moins une came manoeuvrable en regard d'une gorge du tube. Le support de l'invention se caractérise en ce qu'au moins une came est agencée pour exercer sur le tube, lors de sa manoeuvre depuis sa position ouverte vers sa position fermée, une force de friction dirigée vers l'extérieur de la gorge.

Le support de l'invention permet de faciliter et d'accélérer le passage à la position fermée des cames tout en évitant d'occasionner l'usure prématurée des bords de la gorge.

## Description

La présente invention concerne un support de tube dégazeur pour métal en fusion et un tel tube dégazeur.

Il est connu de réaliser des lingots d'alliage métallique ou même directement des pièces mécaniques par coulage dans un moule d'un mélange de métaux fondus. A cet effet, on réalise un bain en faisant fondre ensemble les métaux constituant l'alliage, puis on soumet ce bain à un traitement de purification afin d'obtenir un alliage de qualité optimale. L'ultime étape de ce traitement de purification est communément désignée dégazage. Cette étape consiste à débarrasser le bain des gaz qui ont pu s'y dissoudre et qui pourraient, s'ils étaient laissés dans le mélange, se séparer ultérieurement du liquide pour former des bulles dans la pièce obtenue par coulage. La méthode de dégazage proprement dite consiste à introduire, dans le bain de métaux fondus, un gaz inerte, tel que de l'azote ou de l'argon, afin qu'il réagisse avec les gaz dissous, notamment avec l'hydrogène, et/où qu'il les entraîne vers la surface du bain du fait de la différence de densité entre les gaz et les métaux. Le traitement de dégazage sert en outre à éliminer du bain diverses impuretés.

Les dispositifs connus de dégazage comprennent un tube dégazeur rotatif qui comporte un canal intérieur d'amenée de gaz débouchant à son extrémité inférieure. Ce tube, plongé dans le bain de métal, permet d'une part d'y injecter le gaz inerte, d'autre part de bien répartir les bulles de gaz injectées dans le métal fondu, grâce au mouvement de rotation du tube dégazeur. A cet effet, le dispositif comprend un support de tube dégazeur, ce support servant également à l'alimentation du tube en gaz inerte, grâce à un conduit interne du support qui se raccorde au canal d'amenée de gaz du tube, une fois le tube dégazeur monté dans le support. Le raccordement du tube dégazeur au support pose deux problèmes, à savoir
- d'une part, la liaison mécanique entre ces deux pièces,
- d'autre part, la réalisation d'un joint étanche entre le conduit interne du support et le canal d'amenée de gaz du tube dégazeur.
Ce raccordement est désigné «couplage» dans la présente description.

On connaît déjà un dispositif de couplage qui comporte
- une gorge sur la paroi extérieure du tube dégazeur, à l'extrémité supérieure de ce dernier,
- une extrémité agencée en manchon du support, pour recevoir l'extrémité supérieure du tube dégazeur,
- une ou plusieurs cames montées sur le support, débouchant à l'intérieur du manchon et manoeuvrables entre une position ouverte et une position fermée.

L'extrémité supérieure du tube dégazeur s'engage dans le manchon de manière que la gorge du tube vienne en regard des cames du support. En position ouverte, les cames laissent le tube libre de coulisser axialement dans le manchon. En position fermée, elles dépassent à l'intérieur du manchon et viennent se loger dans la gorge du tube, ce qui immobilise ce dernier dans le manchon et réalise son couplage avec le support. Dans ces dispositifs connus, les cames passent de la position ouverte à la position fermée par un mouvement de rotation à l'occasion duquel elles entrent tangentiellement en contact avec un point isolé du bord supérieur de la gorge du tube et repoussent le tube en direction du support à mesure qu'elles pénètrent dans la gorge, par glissement sur ce point isolé du bord supérieur de la gorge. Ce dispositif est considéré comme simple et efficace, car il permet la mise en place et le retrait aisés du tube dégazeur.

Toutefois, les inventeurs à la base de la présente invention ont identifié certains défauts de ce dispositif connu, défauts que la présente invention vise à supprimer. Ces défauts concernent essentiellement les appuis que les cames exercent sur la gorge au moment du couplage, compte tenu des positions relatives des cames et de la gorge à cet instant. Ces appuis occasionnent d'importantes frictions entre les cames et le bord de la gorge, ce qui, d'une part, entraîne une usure prématurée des bords de la gorge et, d'autre part, rend difficile le passage en position fermée des cames lorsqu'il s'agit de tubes dégazeurs de grande taille, dont le poids dépasse environ vingt kilos. Une autre conséquence néfaste due à l'imperfection de ces appuis est que le joint entre le conduit interne du support et le canal d'amenée du tube dégazeur n'est pas parfaitement étanche du fait que le joint d'étanchéité n'est pas maintenu en compression d'une manière optimale. Les inventeurs à la base de la présente demande ont ainsi réalisé que, contrairement à une thèse communément admise, le dispositif de couplage largement utilisé jusqu'à présent est encore susceptible d'améliorations, du fait de l'existence des défauts précédemment identifiés.

La présente invention a pour objet un support de tube dégazeur pour métal en fusion, apte à recevoir intérieurement un tube dégazeur muni d'une gorge, ledit support comprenant au moins une came en regard de la gorge lorsque le tube est engagé dans ledit support, cette came étant manoeuvrable entre une position fermée dans laquelle elle pénètre dans la gorge et une position ouverte dans laquelle elle est dégagée de la gorge, ledit support étant caractérisé en ce qu'au moins une came dudit support est agencée pour exercer sur le tube, lors de sa manoeuvre depuis sa position ouverte vers sa position fermée, une force de friction dirigée vers l'extérieur de la gorge.

Les inventeurs à la base de la présente invention ont remarqué que, dans le dispositif de l'état de la technique, une des raisons pour lesquelles le passage en position fermée des cames est rendu difficile et occasionne l'usure prématurée des bords de la gorge, est que le positionnement du tube dégazeur dans le support au moment du couplage, combiné à l'agencement des cames, fait que lorsque les cames passent de leur position ouverte à leur position fermée en pivotant autour d'un axe excentré, leur paroi exerce sur le bord de la gorge une force de friction qui est dirigée vers l'intérieur de la gorge, de sorte que cette force de friction s'oppose à l'engagement des cames dans la gorge. En d'autres termes, lorsque l'on actionne les cames pour les amener en position de fermeture, celles-ci exercent sur le tube une force de friction tendant à repousser la gorge, en même temps qu'une force tendant à les faire pénétrer dans la gorge. Cette dernière force étant prépondérante, on obtient quand même le résultat escompté, à savoir l'engagement des cames dans la gorge pour assurer le couplage du tube dégazeur et du support.

Selon la présente invention, la ou les cames sont agencées pour que la force de friction qui s'exerce sur les bords de la gorge lors de leur passage de la position ouverte à la position fermée contribue à assurer le couplage, c'est-à-dire exerce sur le tube dégazeur une force de friction tendant à amener sa gorge en regard des cames. En outre, au moment de la pénétration des cames dans la gorge, il peut se produire que le tube se soulève de quelques millimètres pour amener la gorge en regard des cames, ce qui est facilité par la force de friction dirigée vers l'extérieur de la gorge, obtenue grâce à l'invention. Ainsi, non seulement l'invention élimine l'effet néfaste de la force de friction, mais elle tire profit de son inversion de sens pour faciliter le levage du tube, le cas échéant et, par voie de conséquence, pour mettre et maintenir en compression le joint d'étanchéité entre le conduit interne du support et le canal d'amenée du tube dégazeur.

Avantageusement, les cames sont montées de manière que leur passage en position fermée s'effectue par une rotation autour d'un axe excentré et que cette rotation provoque le déplacement desdites cames sensiblement dans la direction d'enfoncement du tube dégazeur dans le support. A cet effet, il est préférable que les cames soient manoeuvrables par rotation vers le bas, par exemple par rotation d'environ 60 à 90°.

Dans un mode de réalisation de l'invention, au moins une came du support est sensiblement parallèle à la gorge. Ainsi, dans ce mode de réalisation, la came qui pénètre dans la gorge exerce son action non pas tangentiellement en un point isolé de la gorge mais le long d'une ligne de contact. La contrainte subie par le tube est ainsi répartie sur cette arête et cause moins de dégâts que dans le dispositif antérieur, où l'action de la came sur la gorge du tube était ponctuelle.

Dans une variante préférée, la came est conformée en une portion d'anneau centrée sur l'axe du tube dégazeur, la surface de ce dernier étant de révolution au voisinage de la gorge.

L'invention a également pour objet un tube dégazeur rotatif pour métal en fusion destiné à s'engager dans un support, le tube comportant une gorge coopérant avec des moyens de verrouillage prévus dans le support, caractérisé en ce que la gorge est formée dans un méplat.

Selon des caractéristiques particulières de l'invention :
- le méplat est parallèle à l'axe de rotation du tube ;
- le méplat présente une inclinaison par rapport à l'axe de rotation du tube.

Dans un mode de réalisation particulier, la gorge est au moins partiellement délimitée par un insert dur, par exemple métallique. Ainsi, avec des cames métalliques, on assure un contact métal/métal qui est moins propice à l'usure qu'un contact métal/céramique ou métal/graphite. En outre, le fait que la gorge ne soit présente que sur le méplat prévient efficacement la rotation relative du tube par rapport au support.

Dans un mode particulier de réalisation de l'invention, le tube comporte une pluralité de méplats, cette pluralité étant divisée en différents sous-ensembles de méplats, chaque sous-ensemble de méplats étant à lui seul suffisant pour assurer le verrouillage du tube dans son support, tous les sous-ensembles étant identiques et décalés angulairement. Le tube selon ce mode de réalisation est avantageux en ce que l'un de ses sous-ensembles de méplats peut s'user à force de montages/démontages sur le support, mais le tube peut encore être utilisé dans une orientation angulaire différente, mettant en jeu cet autre sous-ensemble de méplats. Typiquement, le tube comporte deux paires de méplats séparées d'un angle de 90° et peut s'utiliser dans une première position jusqu'à usure de la première paire de méplats, puis dans une seconde position orientée à 90° par rapport à la première.

Dans le but de mieux faire comprendre l'invention, on va en décrire maintenant des modes de réalisation donnés à titre d'exemples non limitatifs de la portée de l'invention, en référence au dessin annexé dans lequel :
- la figure 1 est une vue en coupe axiale d'un support de tube et d'un tube, selon un premier mode de réalisation de l'invention,
- la figure 2 est une vue à plus petite échelle et en coupe axiale du support et du tube, alors que le tube est engagé mais pas encore verrouillé dans le support,
- la figure 3 est une vue analogue à la figure 2, montrant le support et le tube au début de l'opération de verrouillage,
- la figure 4 est une vue analogue à la figure 3, à un stade ultérieur du verrouillage,
- la figure 5 est une vue analogue à la figure 4, le tube étant verrouillé dans le support,
- la figure 6, respectivement 7, 8, 9 est une vue de détail à plus grande échelle de la zone VI, respectivement VII, VIII, IX de la figure 2, respectivement 3, 4, 5,
- la figure 10 est une vue en coupe prise dans le plan X-X sur la figure 5 d'un tube et d'un support suivant un autre mode de réalisation,
- la figure 10A est une vue du détail XA du support de la figure 10,
- la figure 11 est une vue en perspective d'un tube selon un autre mode de réalisation,
- la figure 12 est une vue en coupe selon XII-XII de la figure 11,
- la figure 13 est une vue en coupe analogue à la figure 12 d'un tube selon un autre mode de réalisation,
- la figure 14 est une vue en coupe transversale au niveau de ses méplats d'un tube selon un autre mode de réalisation,
- la figure 15 montre un insert métallique destiné à être logé dans un des méplats.

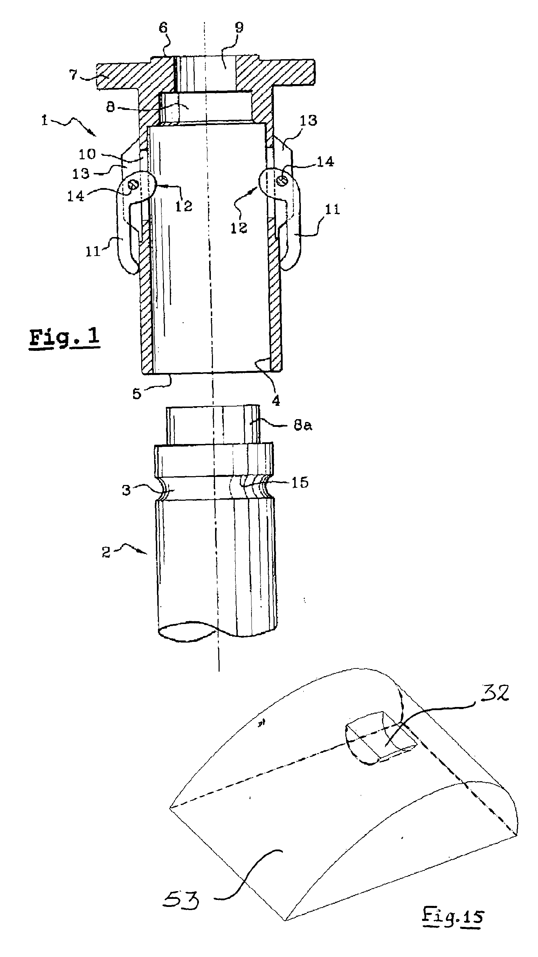

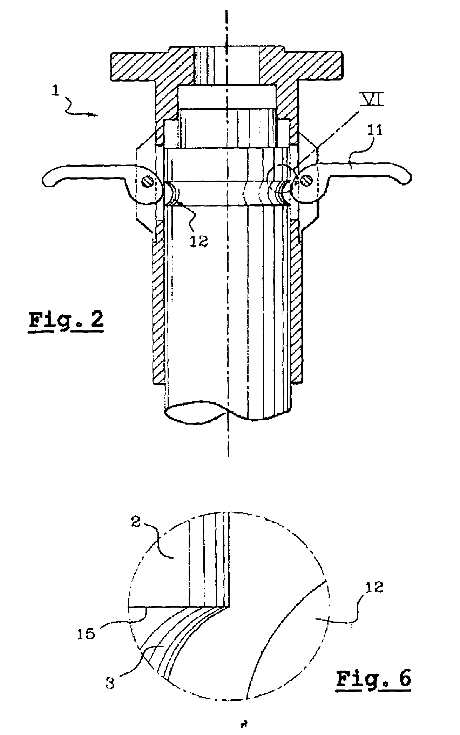

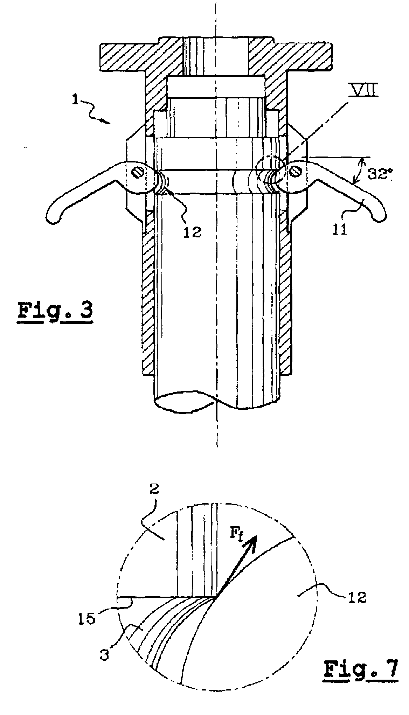

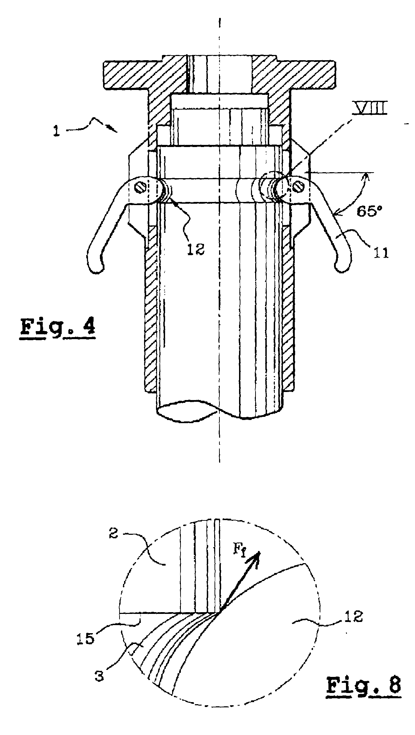

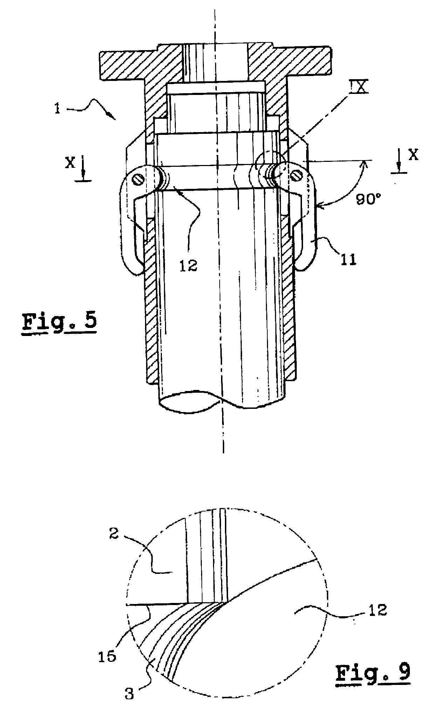

Dans la suite de la description, l'orientation verticale du support 1, du tube 2 et des autres pièces représentées sur le dessin servira à désigner les parties supérieures et inférieures desdites pièces. Le tube dégazeur 2, dont seule la portion supérieure est représentée sur le dessin, comporte une gorge annulaire 3 sur sa paroi externe. L'intérieur du support 1 comporte un alésage 4, dimensionné de manière à recevoir le tube dégazeur 2, dont le diamètre externe est légèrement inférieur à celui dudit alésage, lequel s'étend de l'extrémité inférieure 5 du support jusqu'au voisinage de son extrémité supérieure 6. A l'extrémité supérieure 6 du support, une embase 7 en forme de disque, généralement d'un seul tenant avec le support 1, sert au montage de ce dernier sur un axe (non représenté) d'un moteur d'un dispositif de dégazage (non représenté). L'alésage 4 se prolonge jusqu'à l'embase 7 par un passage destiné à être raccordé à une source de gaz inerte, tel que de l'argon. Ce passage comprend une première partie 8 d'un premier diamètre, inférieur à celui de l'alésage et destiné à recevoir la partie 8a du tube, et une deuxième partie 9, d'un second diamètre encore plus petit que le premier, qui s'étend sur une épaisseur correspondant sensiblement à celle de l'embase 7 et débouche sur la face supérieure de l'embase, pour le raccordement à la source de gaz inerte. Au voisinage de l'extrémité supérieure de l'alésage, le support 1 comporte des ouvertures latérales 10 diamétralement opposées, permettant le passage de cames 12, munies de poignées 11 dépassant à l'intérieur de l'alésage 4 lorsqu'elles occupent leur position fermée, visible aux figures 1 et 5. Les cames 12 sont montées pivotantes sur des nervures axiales externes 13 du support, prévues à cet effet, autour d'axes 14 tangents à la paroi extérieure du support. Les cames 12 peuvent ainsi pivoter d'un quart de tour sous l'action d'un utilisateur qui rabat leurs poignées 11 vers le bas, entre leur position ouverte, représentée à la figure 2, et leur position fermée, représentée à la figure 5, en prenant successivement les positions représentées aux figures 2 à 5, sur lesquelles une seule came a été représentée, l'autre lui étant parfaitement symétrique.

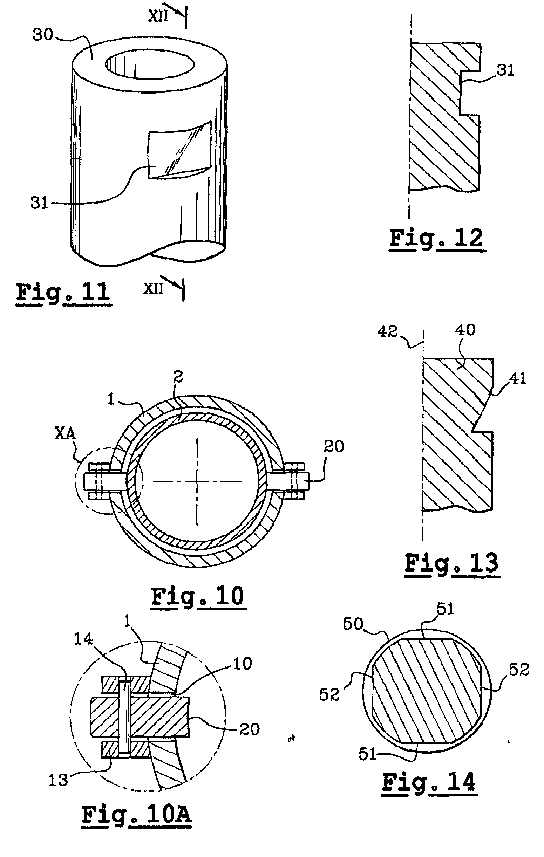

Comme on le voit plus précisément sur les figures 6 à 9, le mouvement de chaque came, lors de son passage de la position ouverte à la position fermée, provoque d'abord la mise en contact de la came avec le bord supérieur 15 de la gorge (figure 6), puis son frottement contre ledit bord (figure 7), jusqu'à ce que la came pénètre dans le fond de la gorge, en provoquant un léger déplacement axial du tube 2 vers le haut (figures 8 et 9). Au moment du frottement, la force de friction de la came sur le tube, ci-après dénommée force de friction F_{f}, qui est générée est dirigée vers l'extérieur de la gorge 3. Ainsi, cette force de friction favorise l'engagement de la came 12 dans le fond de la gorge. En outre, la force de friction F_{f} étant orientée majoritairement vers le haut, dans le sens où sa composante verticale est dirigée vers le haut, elle contribue au déplacement du tube dégazeur vers le haut, pour amener la gorge en regard des cames, comme on le voit aux figures 2 à 5. Ainsi, l'engagement des cames dans la gorge est facilité, l'usure prématurée du bord de la gorge est évitée et le joint d'étanchéité est fortement comprimé.

Sur les figures 10 et 10A, on retrouve le support de tube 1 et le tube 2. Le support de tube comporte deux cames 20 dont les faces de contact avec la gorge du tube sont conformées en portions d'anneaux. Ainsi, les cames sont concaves et parallèles à la gorge, de sorte que leur appui sur le tube s'effectue linéairement. On réduit ainsi les effets de l'usure du tube due aux forces de friction qui s'exercent sur l'arête supérieure 15 de sa gorge au moment du verrouillage.

Sur les figures 11 et 12, on voit un tube 30 comportant deux méplats 31 dont un seul est ici visible. La gorge 32 est présente dans un insert métallique 53 (voir figure 15) logé dans le méplat 31. Ce tube est prévu pour être inséré dans un support de tube comportant des cames à faces de contact rectilignes. Dans ce cas, comme aux figures 10 et 10A, le contact entre les cames et la gorge s'effectue linéairement, ce qui limite l'usure résultant des forces de friction.

Sur la figure 13, on voit un tube 40 comportant également un méplat 41 qui est cette fois incliné par rapport à l'axe 42 du tube. La gorge est présente dans un insert métallique logé dans le méplat comme décrit en référence aux figures 11 et 12. Dans ce cas également, l'appui des cames sur la gorge s'effectue par un contact métal/métal qui empêche l'usure du matériau réfractaire.

A la figure 14, on a représenté une coupe transversale d'un tube 50 au niveau de ses méplats. Ces derniers sont au nombre de quatre et sont distants deux à deux d'un angle de 90°. Ces méplats vont par paires 51, 52 de deux méplats diamétralement opposés. Chaque paire est utilisable individuellement. Ce mode de réalisation permet d'utiliser le tube avec une première paire 51 de méplats jusqu'à usure des gorges du fait des montages/démontages successifs du tube puis avec l'autre paire 52 de méplats après rotation du tube d'un quart de tour. Il est bien entendu que les modes de réalisation qui viennent d'être décrits ne présentent aucun caractère limitatif et qu'ils pourront recevoir toute modification désirable sans sortir pour cela du cadre de l'invention.

### Références:

- 1.: support
- 2.: tube
- 3.: gorge du tube 2
- 4.: alésage du support 1
- 5.: extrémité inférieure du support 1
- 6.: extrémité supérieure du support 1
- 7.: embase en forme de disque
- 8.: première partie du passage d'alimentation en gaz inerte
- 9.: deuxième partie du passage d'alimentation en gaz inerte
- 10.: ouverture latérale du support
- 11.: poignée de la came 12
- 12.: came
- 13.: nervure axiale externe du support 1
- 14.: axe des cames 12
- 15.: bord supérieur de la gorge 3
- 20.: came
- 30.: tube
- 31.: méplat
- 32.: gorge
- 40.: tube
- 41.: méplat
- 42.: axe du tube
- 43.: gorge
- 50.: tube
- 51.: paire de méplats
- 52.: paire de méplats
- 53.: insert métallique

## Revendications

1. Support de tube dégazeur pour métal en fusion, apte à recevoir intérieurement un tube dégazeur (2 ; 30 ; 40; 50) muni d'une gorge (3 ; 32 ; 43), ledit support comprenant au moins une came (12 ; 20) en regard de la gorge lorsque le tube est engagé dans ledit support, cette came étant manoeuvrable entre une position fermée dans laquelle elle pénètre dans la gorge et une position ouverte dans laquelle elle est dégagée de la gorge, ledit support étant **caractérisé en ce qu**'au moins une came (12 ; 20) dudit support est agencée pour exercer sur le tube (2 ; 30 ; 40; 50), lors de sa manoeuvre depuis sa position ouverte vers sa position fermée, une force de friction (F_{f}) dirigée vers l'extérieur de la gorge.

2. Support selon la revendication 1, **caractérisé en ce qu**'au moins une came (12 ; 20) dudit support est montée de manière que son passage en position fermée s'effectue par une rotation autour d'un axe excentré (14) et que cette rotation provoque le déplacement de ladite au moins une came sensiblement dans la direction d'enfoncement du tube dégazeur dans le support.

3. Support selon la revendication 2, **caractérisé en ce que** la came est manoeuvrable par rotation vers le bas.

4. Support selon l'une quelconque des revendications 1 à 3, **caractérisé en ce qu**'au moins une came (13 ; 20) dudit support est sensiblement parallèle à la gorge (3 ; 32 ; 43).

5. Support selon la revendication 4, **caractérisé en ce qu**'au moins une came (20) dudit support est conformée en une portion d'anneau centrée sur l'axe du tube dégazeur, ce dernier étant de révolution au voisinage de la gorge.

6. Tube dégazeur rotatif pour métal en fusion destiné à s'engager dans un support, le tube (30 ; 40; 50) comportant une gorge (32 ; 43) coopérant avec des moyens de verrouillage prévus dans le support, **caractérisé en ce que** la gorge est formée dans un méplat (31 ; 41 ; 51 ; 52).

7. Tube selon la revendication 6, **caractérisé en ce que** le méplat (31 ; 51 ; 52) est parallèle à l'axe de rotation du tube.

8. Tube selon la revendication 6, **caractérisé en ce que** le méplat (41) présente une inclinaison par rapport à l'axe de rotation du tube.

9. Tube selon l'une quelconque des revendications 6 à 8, **caractérisé en ce que** la gorge (32) est au moins partiellement délimitée par un insert dur (53), par exemple métallique.

10. Tube selon l'une quelconque des revendications 6 à 9, **caractérisé en ce qu'**il comporte une pluralité de méplats (51 ; 52), cette pluralité étant divisée en différents sous-ensembles (51 ; 52) de méplats, chaque sous-ensemble de méplats étant à lui seul suffisant pour assurer le verrouillage du tube dans son support, tous les sous-ensembles étant identiques et décalés angulairement.
